# EUROPÄISCHE PATENTSCHRIFT

(11) **EP 1 728 010 B1**
(45) Veröffentlichungstag und Bekanntmachung des Hinweises auf die Patenterteilung: **24.11.2010**
(21) Anmeldenummer: 05714178.0
(22) Anmeldetag: 21.03.2005
(51) Int. Cl.: F16H 55/18

(54) **ZAHNRAD FÜR EINE SPIELFREIE STIRNRADSTUFE**
TOOTHED WHEEL FOR A PLAY-FREE SPUR GEAR SET
ROUE DENTEE POUR UN ETAGE A ROUE DENTEE DROITE SANS JEU

(30) Priorität: 22.03.2004 AT 4952004
(43) Veröffentlichungstag der Anmeldung: 06.12.2006
(73) Patentinhaber: Miba Sinter Austria GmbH, 4663 Laakirchen (AT)
(72) Erfinder: SANDNER, Christian, A-4810 Gmunden (AT)
(74) Vertreter: Hübscher, Helmut
(86) Internationale Anmeldenummer: PCT/AT2005/000096
(87) Internationale Veröffentlichungsnummer: WO 2005/090830

(56) Entgegenhaltungen:
- AT-U1- 4 880
- FR-A- 2 805 327
- PATENT ABSTRACTS OF JAPAN Bd. 1996, Nr. 08, 30. August 1996 (1996-08-30) -& JP 08 109961 A (HINO MOTORS LTD), 30. April 1996 (1996-04-30)
- PATENT ABSTRACTS OF JAPAN Bd. 1999, Nr. 11, 30. September 1999 (1999-09-30) -& JP 11 153210 A (TOYOTA MOTOR CORP; ASANO GEAR CO LTD), 8. Juni 1999 (1999-06-08) in der Anmeldung erwähnt

## Beschreibung

### Technisches Gebiet

Die Erfindung bezieht sich auf ein Zahnrad für eine spielfreie Stirnradstufe mit einer Nabe, mit einem von der Nabe getragenen Zahnkranz, der entlang einer achsnormalen Teilungsebene in zwei Teilkränze, nämlich in einen nabenfesten Kranzteil und in einen diesem gegenüber koaxial drehbar gelagerten Kranzring, geteilt ist, und mit einer die Nabe umschließenden Ringfeder, die sich mit ihren einander in Umfangsrichtung gegenüberliegenden Enden an einstückig mit den beiden Teilkränzen ausgebildeten, einander in axialer Richtung überlappenden Stützstegen abstützt, die in Umfangsrichtung des Zahnkranzes hintereinander angeordnet sind.

### Stand der Technik

Um eine spielfreie Stirnradstufe zur Übertragung wechselnder Drehmomente zu erhalten, ist der Einsatz von Zahnrädern mit einem entlang einer achsnormalen Teilungsebene geteilten Zahnkranz bekannt, wobei die beiden Teilkränze, nämlich ein nabenfester Kranzteil und ein gegenüber diesem Kranzteil koaxial drehbarer Kranzring, gegeneinander federnd verspannt werden, so daß sich beim Eingriff eines solchen geteilten Zahnkranzes in ein Gegenrad die beiden Teilkränze federnd an die einander gegenüberliegenden Zahnflanken des Gegenrades spielfrei anlegen. Um die gegenseitige federnde Verspannung der beiden Kranzteile zu erreichen, wird eine die Nabe des Zahnrades umschließende Ringfeder eingesetzt, die sich mit ihren Enden beispielsweise an axialen Stiften einerseits des nabenfesten Kranzteiles und anderseits des Kranzringes unter einer entsprechenden Vorspannung abstützt. Um den mit dem paßgenauen Einsetzen der axialen Stifte verbundenen Aufwand zu vermeiden, wurde bereits vorgeschlagen (AT 004 880 U1), diese axialen Stifte durch Stützstege zu ersetzen, die einstückig mit dem nabenfesten Kranzteil einerseits und dem Kranzring anderseits ausgebildet und gegeneinander radial versetzt angeordnet sind, um sie in Umfangsrichtung aneinander vorbeibewegen zu können. Diese bekannte Konstruktion bedingt wegen der radialen Verkürzung der Stützstege und der damit verbundenen Verringerung der Abstützfläche für die Ringfeder eine vergrößerte Druckbelastung der Stützstege, was solche Konstruktionen für gesinterte Teilkränze wenig geeignet macht.

Zur Vermeidung diese Nachteils wurde bereits vorgeschlagen (JP 11153210 A), die Stützstege in Umfangsrichtung hintereinander anzuordnen. Diese bekannte Konstruktion hat aber den Nachteil, daß die Ringfeder während des Montagevorganges nicht vorgespannt werden kann.

Darüber hinaus ist es bekannt (JP 08-109961 A, Stand der Technik), die Ringfeder zum gegenseitigen Verspannen der beiden Teilkränze eines Zahnrads an Stützbolzen abzustützen, die in Umfangsrichtung mit Abstand hintereinander angeordnet und in Aufnahmebohrungen der beiden Teilkränze eingesetzt sind. Zwischen den beiden Stützbolzen ist auf einem der beiden Teilkränze ein zusätzlicher Anschlagzapfen für den Stützbolzen des anderen Teilkranzes vorgesehen, so daß dieser Anschlagzapfen die Entspannung der Ringfeder beschränkt. Abgesehen davon, dass das Vorspannen der zwischen den beiden Teilkränzen angeordneten Ringfeder wegen eines fehlenden Zugangs zur Ringfeder von außen erschwert ist, eignet sich eine solche Konstruktion nicht für eine pulvermetallurgische Herstellung der Teilkränze.

Schließlich ist es bei einem gattungsfremden Ketten- oder Zahnriemenrad bekannt (FR 2 805 327 A), den einen von zwei Teilkränzen gegenüber dem anderen mit Hilfe von über den Umfang verteilten, in Umfangsrichtung wirksamen Schraubenfedern zu verspannen, die je in eine Umfangsausnehmung des einen Teilkranzes eingesetzt sind und sich an einem in diese Umfangsausnehmung axial vorstehenden Anschlag des anderen Teilkranzes abstützen. Abgesehen davon, daß auch bei einer solchen Konstruktion eine Vorspannung der Schraubenfedern vor einem Zahneingriff mit einer Kette bzw. einem Zahnriemen nicht möglich ist, liegen hinsichtlich der Anordnung von über den Umfang verteilten Schraubenfedern nicht vergleichbare Verhältnisse vor.

### Darstellung der Erfindung

Der Erfindung liegt somit die Aufgabe zugrunde, ein Zahnrad für eine spielfreie Stirnradstufe der eingangs geschilderten Art so auszugestalten, daß die Teilkränze einstückig als allen Belastungsanforderungen entsprechende Sinterteile pulvermetallurgisch hergestellt werden können, die eine einfache Montage des Zahnrades erlauben.

Die Erfindung löst die gestellte Aufgabe dadurch, daß der Stützsteg eines Teilkranzes den anderen Teilkranz in einer Durchtrittsöffnung mit Spiel in Umfangsrichtung durchsetzt und daß der Stützsteg des Teilkranzes mit der Durchtrittsöffnung einen die Durchtrittsöffnung begrenzenden Montageanschlag für den anderen Stützsteg bildet.

Die einstückig mit den zugehörigen Teilkränzen ausgebildeten, einander in axialer Richtung überlappenden Stützstege, die in Umfangsrichtung hintereinander angeordnet sind, um mit ihren den Enden der Ringfeder zugekehrten Stirnseiten eine ausreichend große Abstützfläche für die Federenden sicherzustellen und damit eine Überlastung der Sinterteile zu vermeiden, machen besondere Vorkehrungen für die Montage der Ringfeder zwischen den beiden Teilkränzen erforderlich. Zu diesem Zweck ist in einem der Teilkränze eine Durchtrittsöffnung für den Steg des anderen Teilkranzes vorgesehen, dessen Stützsteg die Durchtrittsöffnung mit Spiel in Umfangsrichtung durchsetzt und im Stützsteg des die Durchtrittsöffnung aufweisenden Teilkranzes einen dieser Durchtrittsöffnung begrenzenden Montageanschlag findet, so daß die Ringfeder mit Hilfe der sich in dieser Montagestellung gegenseitig abstützenden Stützstege unter einer entsprechenden Vorspannung gehalten werden kann, gegen die die beiden Teilkränze im Rahmen des Spiels des die Durchtrittsöffnung durchsetzenden Stützsteges in die Deckungslage der Zähne verdreht werden müssen, um in Eingriff mit einem Gegenrad gebracht werden zu können.

Obwohl es für die Funktion keine Rolle spielt, in welchem der beiden Teilkränze die Durchtrittsöffnung für den Stützsteg des jeweils anderen Teilkranzes vorgesehen ist, ergeben sich besonders vorteilhafte Konstruktionsbedingungen, wenn der nabenfeste Kranzteil diese Durchtrittsöffnung für den Stützsteg des Kranzringes aufweist, weil dieser Kranzteil aufgrund seiner Verbindung mit der Nabe durch die Durchtrittsöffnung keine ins Gewicht fallende Schwächung erleidet.

Wie bereits ausgeführt wurde, müssen die beiden Teilkränze zur Deckung Ihrer

Zähne gegen die Vorspannkraft der Ringfeder verdreht werden. Der durch den die Durchtrittsöffnung in Umfangsrichtung begrenzenden Stützsteg gebildete Montageanschlag bietet für das Festhalten dieser Deckungslage eine einfache konstruktive Möglichkeit, weil hiefür lediglich ein Abstandhalter zwischen die beiden Stützstege von der Seite des die Durchtrittsöffnung aufweisenden Teilkranzes her einzusetzen ist. Dieser Abstandhalter verhindert ein gegenseitiges Rückdrehen der beiden Teilkränze in die anschlagbegrenzte Ausgangsstellung, so daß das Zahnrad wie ein ungeteiltes Zahnrad mit dem Gegenrad in Eingriff gebracht werden kann, bevor der Abstandhalter entnommen wird und sich die Zähne der beiden Teilkränze unter einer entsprechenden Vorspannung federnd an die einander gegenüberliegenden Zahnflanken des Gegenrades angelegen.

### Kurze Beschreibung der Zeichnung

In der Zeichnung ist der Erfindungsgegenstand beispielsweise dargestellt. Es zeigen
- Fig. 1: ein erfindungsgemäßes Zahnrad für eine spielfreie Stirnradstufe in einem vereinfachten Axialschnitt,
- Fig. 2: einen Schnitt nach der Linie II-II der Fig. 1 und
- Fig. 3: eine der Fig. 2 entsprechende Darstellung des Zahnrades in der durch einen Abstandhalter gesicherten Deckungslage der beiden Teilkränze.

### Weg zur Ausführung der Erfindung

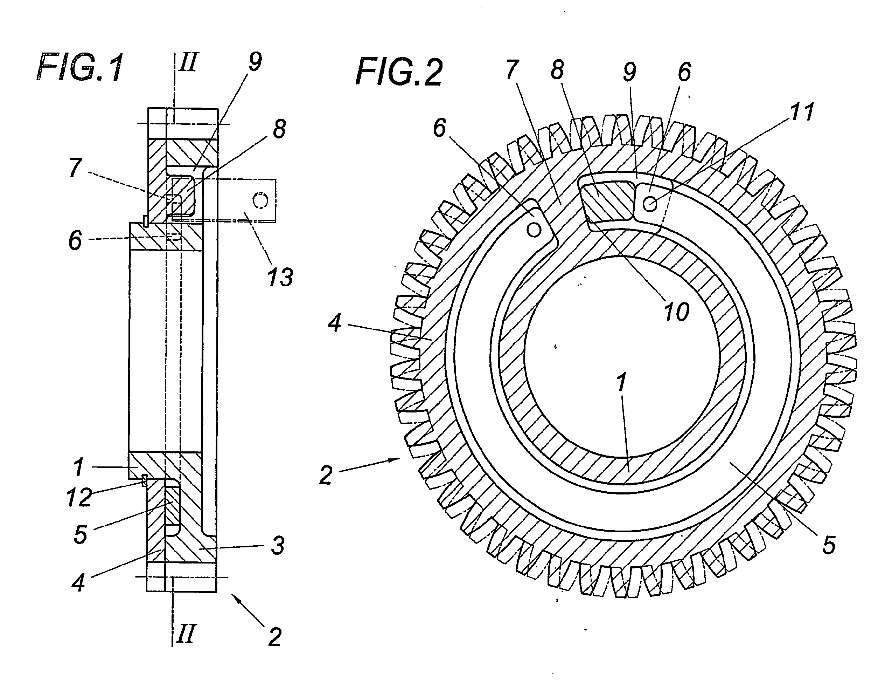

Wie die Fig. 1 und 2 erkennen lassen, besteht das dargestellte Zahnrad aus einer Nabe 1 und einem Zahnkranz 2, der entlang einer zur Zahnradachse senkrechten Ebene in einen nabenfesten Kranzteil 3 und einen Kranzring 4 unterteilt ist, der auf der Nabe 1 drehbar gehalten wird. Zwischen dem nabenfesten Kranzteil 3 und dem diesem gegenüber verdrehbaren Kranzring 4 ist eine Ringfeder 5 vorgesehen, die die Nabe umschließt und sich mit ihren einander in Umfangsrichtung gegenüberliegenden Enden 6 an Stützstegen 7 und 8 einerseits des Kranzteiles 3 und anderseits des Kranzringes 4 abstützt. Diese Stützstege 7 und 8 liegen in Umfangsrichtung des Zahnkranzes 2 hintereinander, wobei gemäß der Fig. 2 der Stützsteg 7 auf der dem zugehörigen Ende 6 der Ringfeder 5 abgekehrten Seite eine Durchtrittsöffnung 9 für den Stützsteg 8 des Kranzringes 4 begrenzt. Die Anordnung ist dabei so getroffen, daß der Stützsteg 8 des Kranzringes in die Durchtrittsöffnung 9 mit Spiel in Umfangsrichtung eingreift und zufolge der Vorspannung der Ringfeder 5 an den Stützsteg 7 des Kranzteiles 3 angedrückt wird, der somit einen Montageanschlag 10 für den Stützsteg 8 bildet. Zum Vorspannen der Ringfeder 5 wird diese zunächst über die Nabe 1 geschoben und am Stützsteg 7 des nabenfesten Kranzteiles 3 abgestützt, bevor sie durch die Durchtrittsöffnung 9 mittels eines Spannwerkzeuges gespannt wird, das an einer Ansatzöffnung 11 der Ringfeder 5 angreift. Durch ein Aufschieben des Kranzringes 4 auf die Nabe 1 kann dann der Stützsteg 8 des Kranzringes 4 zwischen dem Stützsteg 7 des Kranzteils 3 und dem durch das Spannwerkzeug aufgespreizten Ende 6 der Ringfeder 5 in die Durchtrittsöffnung 9 eingeführt werden, bevor das Spannwerkzeug entfernt und der Kranzring 4 auf der Nabe 1 beispielsweise mit Hilfe eines Sprengringes 12 axial gesichert wird. Aufgrund der Vorspannung der Ringfeder 5 wird der Stützsteg 8 des Kranzringes 4 gegen den Montageanschlag 10 des Stützsteges 7 gedrückt, wobei sich zwischen den beiden Teilkränzen des Zahnkranzes 2 eine gegenseitige Drehstellung ergibt, in der die in der Fig. 2 strichpunktiert angedeuteten Zähne des Kranzringes 4 gegenüber den Zähnen des Kranzteils 3 winkelversetzt sind.

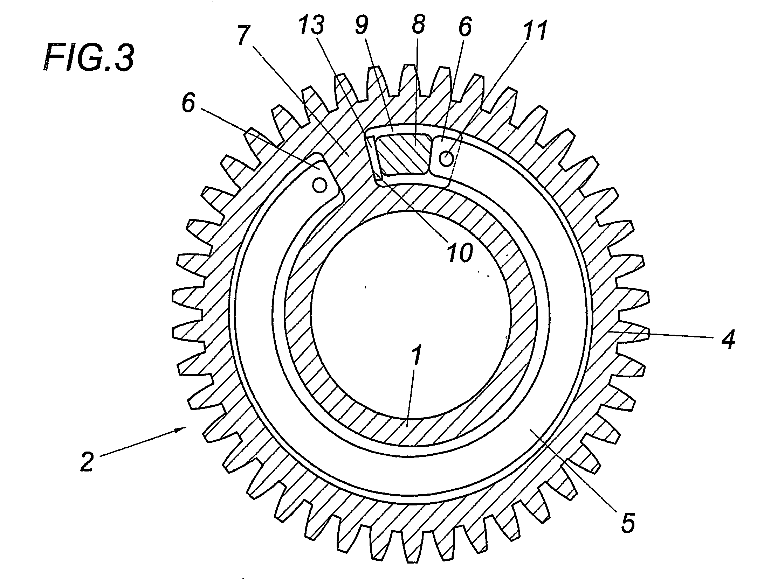

Da das Zahnrad in dieser Winkelversetzung der beiden Zahnkränze nicht mit einem Gegenrad in Eingriff gebracht werden kann, müssen die beiden Teilkränze 3 und 4 des Zahnkranzes 2 entgegen der Vorspannung der Ringfeder 5 in eine Deckungslage gedreht werden, wie sie in der Fig. 3 dargestellt ist. Zum Festhalten dieser Deckungslage dient ein Abstandhalter 13 zwischen dem Montageanschlag 10 des Stützsteges 7 und dem Stützsteg 8. Dieser die Deckungslage der Teilkränze 3 und 4 sichernde Abstandhalter 13 verhindert ein gegenseitiges Rückdrehen der Teilkränze 3, 4 in die Ausgangslage nach der Fig. 2, so daß das Zahnrad ohne Schwierigkeiten mit einem Gegenrad in Eingriff gebracht werden kann. Nach dem Entfernen des Abstandhalters 13 bedingt die Vorspannung der Ringfeder 5 eine gegenseitige Verdrehung der Teilkränze 3 und 4, bis die Zähne der Teilkränze 3 und 4 federnd an den Gegenflanken der Zähne des Gegenrades anliegen und damit einen spielfreien Zahneingriff gewährleisten.

Mit der Ausbildung von Stützstegen 7, 8, die in Umfangsrichtung hintereinander vorgesehen sind, wobei der eine Stützsteg 7 einen Montageanschlag 10 für den anderen Stützsteg 8 bildet, kann die Belastung der Kranzteile 3 und 4 insbesondere im Bereich der Stützstege 7, 8 auf ein Maß gegrenzt werden, das die pulvermetallurgische Herstellung dieser Teilkränze 3 und 4 erlaubt. Die Durchtrittsöffnung 9 in dem einen Teilkranz 3 für den Stützsteg 8 des anderen Teilkranzes 4 sichert dabei einfache Montagebedingungen.

## Patentansprüche

1. Zahnrad für eine spielfreie Stirnradstufe mit einer Nabe (1), mit einem von der Nabe (1) getragenen Zahnkranz (2), der entlang einer achsnormalen Teilungsebene in zwei Teilkränze, nämlich in einen nabenfesten Kranzteil (3) und in einen diesem gegenüber koaxial drehbar gelagerten Kranzring (4), geteilt ist, und mit einer die Nabe (1) umschließenden Ringfeder (5), die sich mit ihren einander in Umfangsrichtung gegenüberliegenden Enden (6) an einstückig mit den beiden Teilkränzen ausgebildeten, einander in axialer Richtung überlappenden Stützstegen (7, 8) abstützt, die in Umfangsrichtung des Zahnkranzes (2) hintereinander angeordnet sind, **dadurch gekennzeichnet, daß** der Stützsteg (8) eines Teilkranzes den anderen Teilkranz in einer Durchtrittsöffnung (9) mit Spiel in Umfangsrichtung durchsetzt und daß der Stützsteg (7) des Teilkranzes mit der Durchtrittsöffnung (9) einen die Durchtrittsöffnung (9) begrenzenden Montageanschlag (10) für den anderen Stützsteg (8) bildet.

2. Zahnrad nach Anspruch 1, **dadurch gekennzeichnet, daß** der nabenfeste Kranzteil (3) die Durchtrittsöffnung (9) für den Stützsteg (8) des Kranzringes (4) aufweist.

3. Zahnrad nach Anspruch 1 oder 2, **dadurch gekennzeichnet, daß** zwischen die beiden Stützstege (7, 8) von der Seite des die Durchtrittsöffnung (9) aufweisenden Teilkranzes her ein Abstandhalter (13) einsetzbar ist.

## Claims

1. Toothed wheel for a play-free spur wheel section, having a hub (1), having a toothed ring (2) which is supported by the hub (1) and is split into two partial rings along a dividing plane normal to an axis, namely into a ring part (3) fixed to the hub and a ring crown (4) mounted to be rotatable coaxially relative to the ring part, and having an annular spring (5) which encloses the hub (1) and is supported with its circumferentially opposed ends (6) on support webs (7, 8) which are formed in one piece with the two partial rings, overlap each other in the axial direction and are arranged one behind the other in the circumferential direction of the toothed ring (2), **characterised in that** the support web (8) of one partial ring penetrates the other partial ring in a through-opening (9) with circumferential play, and **in that** the support web (7) of the partial ring having the through-opening (9) forms an assembly stop (10), defining the through-opening (9), for the other support web (8).

2. Toothed wheel as claimed in Claim 1, **characterised in that** the ring part (3) fixed to the hub comprises the through-opening (9) for the support web (8) of the ring crown (4).

3. Toothed wheel as claimed in Claim 1 or 2, **characterised in that** a spacer (13) can be inserted between the two support webs (7, 8) from the side of the partial ring comprising the through-opening (9).

## Revendications

1. Roue dentée pour un étage à roue dentée droite sans jeu, avec un moyeu (1), avec une couronne dentée (2) portée par le moyeu (1), divisée en deux couronnes partielles le long d'un plan de division normal à l'axe, précisément en une partie de couronne (3), fixée au moyeu, et en un anneau de couronne (4), monté en palier, avec possibilité de tourner coaxialement par rapport à celle-ci, et avec un ressort annulaire (5) entourant le moyeu (1), prenant appui, par ses extrémités (6) opposées les unes aux autres en direction périphérique, sur des nervures d'appui (7, 8) réalisées d'une seule pièce avec les couronnes partielles, se chevauchant l'une l'autre en direction axiale, disposées l'une derrière l'autre dans la direction périphérique de la couronne dentée (2), **caractérisée en ce que** la nervure d'appui (8) d'une couronne partielle traverse avec du jeu en direction périphérique l'autre couronne partielle dans une ouverture de passage (9), et **en ce que** la nervure d'appui (7) de la couronne partielle forme, avec l'ouverture de passage (9), une butée de montage (10), délimitant l'ouverture de passage (9), pour l'autre nervure d'appui (8).

2. Roue dentée selon la revendication 1, **caractérisée en ce que** la partie de couronne (3) fixée au moyeu présente l'ouverture de passage (9) pour la nervure d'appui (8) de l'anneau de couronne (4).

3. Roue dentée selon la revendication 1 ou 2, **caractérisée en ce qu'**un écarteur (13) est susceptible d'être inséré entre les deux nervures d'appui (7, 8), depuis le côté de la couronne partielle présentant l'ouverture de passage (9).
